Europäisches Patentamt

European Patent Office

Office européen des brevets

(19)

(11) Publication number: **0 056 323**
A1

# (12) EUROPEAN PATENT APPLICATION

(21) Application number: 82300118.5

(22) Date of filing: 11.01.82

(51) Int. Cl.³: **B 32 B 27/08**, B 65 D 81/34, B 65 D 65/40

(30) Priority: 12.01.81 GB 8100785

(71) Applicant: **DRG (UK) LIMITED, 1 Redcliffe Street, Bristol, BS99 7QY (GB)**

(43) Date of publication of application: 21.07.82 **Bulletin 82/29**

(72) Inventor: **Smith, Malcolm James, 12 Ridgewood Knoll Hill, Sneyd Park Bristol, BS9 1QZ (GB)**

(84) Designated Contracting States: **AT BE CH DE FR GB IT LI NL SE**

(74) Representative: **Armitage, Ian Michael et al, MEWBURN ELLIS & CO. 2/3 Cursitor Street, London EC4A 1BQ (GB)**

(54) **Packaging material and packages made therefrom.**

(57) A thermoformable laminate for a sterilisable package comprises a cast layer of polyester joined by a bonding layer directly or indirectly to a heat-sealable layer. The layers are preferably co-extruded through a common die.

EP 0 056 323 A1

ACTORUM AG

0056323

PACKAGING MATERIAL AND PACKAGES MADE
THEREFROM

This invention relates to materials for use in packaging, and more especially in producing sterilisable packages.

It is known to produce a sterilisable package utilising a material which is a laminate of polyethyleneterephthalate and polypropylene (PP) or a low density polyethylene (LDPE), bonded together by a suitable lacquer laminant such as a conventional polyurethane adhesive or a key coating. The PP or LDPE layer is needed to make the material heat sealable, e.g. to an adjacent plastics or paper layer. The polyester film is a preformed layer and is oriented in order to provide its crystallinity and strength and is not thermoformable, so that packages made from such materials are generally flat, e.g. a bag or pouch, which may be gusseted.

The present invention provides a laminate for sterilisable packages comprising a cast polyester base layer bonded by a laminant layer to a heat-sealable thermoplastic layer. Preferably the heat-sealable layer comprises polypropylene, low density polyethylene, or Surlyn (Trade Mark for an ionomer resin).

The bonding layer is suitably an olefinic copolymer reactable and compatible with the base layer and heat-sealable layer in which the weight percentage of an ester based comonomer in ethylene may vary from 3% upwards. A preferred range is from 16% to 40% by weight, a suitable example being 28% by weight. Suitable bonding layer materials include EVA (ethylene-vinyl acetate copolymer), EEA (ethylene-ethyl acrylate copolymer), EAA (ethylene-acrylic acid copolymer), EMA (ethylene methyl acrylate copolymer), EBA (ethylene-butyl copolymer), and modifications thereof, especially terpolymers with grafted maleic anhydride groups, or grafted co- and terpolymers with PP, HDPE (high density polyethylene) and LDPE could be used. The bonding layer preferably has a thickness of from 16 to 24 microns, most preferably around 20 microns.

Preferred materials for the polyester layer are PBT (polybutylene terephthalate), PETG copolyester (a glycol-modified polyethylene terephthalate), and PCTA copolyester (a copolymer of cyclohexanedimethanol and terephthalic acid with part of the terephthalic acid replaced by another acid. PBT is especially preferred.

The outer layers of the laminate could be separately made and then lacquer laminated using for example a polyurethane adhesive or key coat. Preferably, however, the layers are co-extruded through a common die. This produces a very clear film, and the multi-layer formation is readily thermoformable and is stable to normal sterilisation techniques.

For steam sterilisation the preferred heat-sealable layer is polypropylene; whereas for gamma ray or ethylene oxide sterilisation the heat-sealable layer is LDPE. The heat-sealable layer should be capable of heat-sealing to itself or to other layers such as paper or film which make up a package.

A suitable package is made by thermoforming the laminate as desired, placing the contents within the thermoformed cavity, and then sealing the package with a medically approved paper layer. Alternatively a bag or pouch can be formed using the laminate in combination with a paper layer. The paper layer is especially suitable for steam or ethylene oxide sterilisation.

The base layer has a relatively high coefficient of friction, and if it is desired that the packages should be able to slide over each other a slip agent can be incorporated in that layer, preferably as a master batch in the base layer material prior to extrusion. Suitable slip additives are stearates, amides and siloxanes. Preferred master batches for incorporation in the base layer are polyethylene/fatty acid amide and polydimethyl siloxane/polyethylene compositions. The incorporation of a slip additive usually has the effect of introducing a slight haze into the otherwise clear base layer.

The polyester layer is essentially non-oriented, in contrast with conventional polyester films.

The polyester layer need not be directly bonded to the heat-sealable layer by the bonding layer. One or more additional layers may be interposed between the bonding layer and the heat-sealable layer. For example, scrap trimmed from the edge of the laminate may be returned to the extruder and mixed with the bonding layer or extruded as a separate layer between the bonding layer and the heat-sealable layer. A further bonding layer may be located between the scrap layer and the heat-sealable layer if the bond between them would otherwise be inadequate.

CLAIMS:

1.   A laminate for sterilisable packages comprising a cast polyester base layer bonded by a laminant layer to a heat-sealable thermoplastic layer.

2.   A laminate according to claim 1 wherein the layers are co-extruded.

3.   A laminate according to claim 1 or claim 2 wherein the polyester layer is selected from PBT, PETG copolyester and PCTA copolyester.

4.   A laminate according to any one of claims 1, 2 and 3 wherein the heat-sealable layer is selected from polypropylene and low density polypropylene.

5.   A laminate according to any one of the preceding claims wherein the bonding layer is an olefinic copolymer comprising at least 3% by weight of an ester based comonomer in ethylene.

6.   A laminate according to claim 5 wherein the ester based comonomer is present in an amount of from 10% to 40% by weight.

7.   A laminate according to any one of the preceding claims wherein the bonding layer is selected from EVA, EEA, EAA, EMA, EBA and modifications thereof.

8.   A laminate according to claim 7 wherein said modification takes the form of a terpolymer with grafted maleic anhydride groups.

9.   A laminate according to any one of the preceding claims including scrap material from previously produced laminate incorporated in the bonding layer or as a further layer between said bonding layer and the heat-sealable layer optionally with a further bonding layer between the scrap layer and the heat-sealable layer.

10. A sterilisable container comprising a sheet of laminate according to any one of the preceding claims peripherally heat-sealed to a sheet of paper.

European Patent
Office

**EUROPEAN SEARCH REPORT**

0056323

Application number

EP 82 30 0118

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| X | GB-A-1 405 769 (B.A.S.F.) *Entire patent* | 1-7 | B 32 B 27/08<br>B 65 D 81/34<br>B 65 D 65/40 |
| Y | US-A-3 922 473 (Y.KOSAKA et al.) *Claims 1,2,6; column 1, lines 7-16; column 2, line 39 - column 3, line 47; examples 1,4* | 1,4-8 | |
| Y | GB-A- 953 663 (I.C.I.) *Claims 1,2; page 1, lines 39-82; page 2, lines 83-90; example 1* | 1,4 | |
| Y | GB-A-1 201 639 (ETHYL CO.)<br><br>*Claims 1,2,5,7-11; page 1, line 11 - page 2, line 44* | 1,3,5-7 | |
| A | US-A-4 064 302 (E.C.KOZLOWSKI) *Claims 1-3,5; column 1, lines 6-31; column 3, line 39 - column 4, line 65; column 5, line 56 - column 6, line 14* | 10 | TECHNICAL FIELDS SEARCHED (Int. Cl. 3)<br><br>B 32 B<br>B 65 D |

The present search report has been drawn up for all claims

| Place of search | Date of completion of the search | Examiner |
|---|---|---|
| THE HAGUE | 20-04-1982 | BLASBAND I. |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO Form 1503. 03.82